# EUROPÄISCHE PATENTSCHRIFT

(11) **EP 3 208 404 B1**
(45) Veröffentlichungstag und Bekanntmachung des Hinweises auf die Patenterteilung: **27.11.2019**
(21) Anmeldenummer: 17156622.7
(22) Anmeldetag: 17.02.2017
(51) Int. Cl.: E04H 12/08, E04H 12/24, E04H 12/34, F03D 13/10, F03D 13/20

(54) **VERFAHREN UND VORRICHTUNG ZUR MONTAGE EINES ROHRTURMSEGMENTS**
METHOD AND APPARATUS FOR MOUNTING A PIPE TOWER SEGMENT
PROCÉDÉ ET DISPOSITIF DE MONTAGE D'UN MÂT TUBULAIRE

(30) Priorität: 19.02.2016 DE 102016002372
(43) Veröffentlichungstag der Anmeldung: 23.08.2017
(73) Patentinhaber: Senvion GmbH, 22297 Hamburg (DE); SIAG Industrie GmbH, 04347 Leipzig (DE)
(72) Erfinder: Edelmann, Ulf, 24787 Fockbek (DE); Petersen, Jens, 24811 Brekendorf (DE)
(74) Vertreter: Glawe, Delfs, Moll

(56) Entgegenhaltungen:
- US-A1- 2015 176 299

## Beschreibung

Die Erfindung betrifft ein Verfahren zur Montage eines ringförmigen Rohrturmsegmentes aus wenigstens drei ringsegmentförmigen Paneelen, sowie eine dafür besonders geeignete Montagehilfe.

Aus mehreren Rohrturmsegmenten zusammengesetzte Rohrturmbauwerke sind bekannt. Entsprechende Türme werden insbesondere häufig als Türme für Windenergieanlagen verwendet, wobei am Turmkopf die Gondel mit dem darin drehbar gelagerten Rotor der Windenergieanlage angeordnet ist.

Es ist bekannt, Rohrturmsegmente als rohrförmige Bauteile derart vorzufertigen, dass sie am Errichtungsort lediglich auf ein Fundament oder ein bereits zuvor aufgestelltes Rohrturmsegment aufgesetzt und mit diesem verbunden werden müssen. Zur Verbindung können die Rohrturmsegmente miteinander verschweißt oder an dafür vorgesehenen Flanschen miteinander verschraubt werden.

Der maximale Durchmesser als rohrförmige Bauteile vorgefertigter Rohrturmsegmente ist durch Anforderungen an die Transportierbarkeit begrenzt. So muss der Durchmesser entsprechender Rohrturmsegmente für einen Straßentransport regelmäßig weniger als 4,5 m betragen, um die Durchfahrtshöhe von bspw. Brücken einhalten zu können. Aus einem entsprechenden maximalen Durchmesser ergeben sich jedoch statische Limitierungen für ein aus entsprechenden Rohrturmsegmenten bestehendes Rohrturmbauwerk hinsichtlich der maximalen Turmhöhe und/oder dem am Turmkopf maximal aufzunehmenden Gewicht, bspw. dem Gewicht der Gondel und des Rotors einer Windenergieanlage.

Insbesondere um höhere Türme für Windenergieanlagen zur Ausnutzung des in höheren Lagen herrschenden Windes zu ermöglichen, ist es bekannt, wenigstens einen Teil der Rohrturmsegmente eines entsprechenden Rohrturmbauwerkes aus längsorientierten Schalen zu bilden, die einzeln zum Aufstellort der Windenergieanlage transportiert und erst dort zu einem ringförmigen Rohrsegment zusammengesetzt werden. Indem die Schalen einzeln transportiert werden, ist der Durchmesser des zusammengesetzten Rohrturmbauwerkes nicht mehr durch bspw. die Durchfahrtshöhe von Brücken begrenzt, sondern kann deutlich größer gewählt werden. Es ist lediglich erforderlich, die einzelnen Schalen so auszugestalten, dass diese problemlos zum Aufstellort transportiert werden können. Insbesondere kann auch die Anzahl der Schalen zur Bildung des vollständigen Rohrturmsegments so gewählt werden, dass die Dimensionen der einzelnen Schalen einen problemlosen Transport gestatten.

Im Stand der Technik sind verschiedene Verfahren zum Zusammensetzen der Schalen zu einem Rohrturmsegment bekannt. Neben der Montage des Rohrturmsegments im liegenden Zustand, bei der die einzelnen Schalen nacheinander zusammengefügt werden, während das Rohrturmsegment bzw. dessen bereits installierte Schalen drehbar auf einem Hilfsgerüst abgelegt sind, sodass das Rohrturmsegment anschließend für die eigentliche Montage noch aufgerichtet werden muss, sind auch Verfahren bekannt, bei dem das Rohrturmsegment unmittelbar stehend montiert wird. Die entsprechenden Verfahren erfordern jedoch entweder eine aufwändige und kostenintensive Installationsplattform (vgl. bspw. WO 2012/007226 A2) oder die Ausrichtung der einzelnen Schalen zueinander, sodass diese miteinander verbunden werden können, ist schwierig. Das Dokument US 2015/0176299 A1 offenbart ein Verfahren zur Errichtung eines Turm eines Windenergieanlage, bei der die einzelnen Turmsegmente durch ringsegmentförmigen Paneele zusammengesetzt sind. Zunächst werden zwei gegenüberliegende Paneele eines Turmsegmentes durch eine Verbindungsstruktur zu einer Einheit verbunden, die dann als Ganzes auf das Rohrturmfundament oder ein bereits errichteten Rohrturmsegment gehoben wird. Anschließend werden die noch fehlenden Paneele ergänzt, indem sie aufgestellt und unmittelbar mit den benachbarten, bereits errichteten Paneele verbunden werden. Nachteilig hieran ist das Erfordernis einer aufwendigen Verbindungsstruktur, die für das Anheben und Aufstellen von zwei darüber verbundenen Paneele ausgelegt sein muss.

Aufgabe der vorliegenden Erfindung ist es, ein Verfahren zur Montage eines ringförmigen Rohrturmsegmentes aus wenigstens drei ringsegmentförmigen Paneelen sowie eine dafür besonders geeignete Montagehilfe zu schaffen, mit denen die Nachteile aus dem Stand der Technik zumindest vermindert werden können.

Gelöst wird diese Aufgabe durch ein Verfahren gemäß Hauptanspruch, sowie eine Montagehilfe gemäß dem nebengeordneten Anspruch. Vorteilhafte Weiterbildungen sind Gegenstand der abhängigen Ansprüche.

Demnach betrifft die Erfindung ein Verfahren zur Montage eines ringförmigen Rohrturmsegmentes aus wenigstens drei ringsegmentförmigen Paneelen auf einer horizontal ausgerichteten, ringförmigen Aufstellhilfe, die zur Aufnahme des unteren Endes des Rohrturmsegmentes ausgebildet ist, mit den Schritten:
a) Aufstellen eines ersten ringsegmentförmigen Paneels mit dessen Unterseite auf die Aufstellhilfe;
b) Aufstellen eines zweiten ringsegmentförmigen Paneels mit dessen Unterseite auf die Aufstellhilfe;
c) Verbinden der Oberseiten des ersten und zweiten Paneels mit einem Montageträger, sodass sich die beiden Paneele über den Montageträger gegenseitig stützen;
d) Aufstellen eines zu dem einem bereits aufgestellten Paneel benachbarten weiteren Paneels mit dessen Unterseite auf die Aufstellhilfe;
e) Verbinden des weiteren Paneel an seiner Oberseite über eine Ausrichtungshilfe mit dem Montageträger, wobei die Ausrichtungshilfe am Montageträger befestigte, schwenkbare Stellarme sind;
f) Verbinden des weiteren Paneels mit dem oder den benachbarten Paneel(en);
g) Wiederholen der Schritte (d) und (e) bis das Rohrturmsegment vollständig ist; und
h) Entfernen des Montageträgers.

Die Erfindung betrifft weiterhin eine Montagehilfe zur Verwendung in dem erfindungsgemäßen Montageverfahren, mit einem Montageträger mit wenigstens einem Paar von voneinander beabstandeten Anbindungspunkten zur Befestigung an der Oberseite des ersten und zweiten Paneels eines aus mehr als drei ringsegmentförmigen Paneelen aufzubauenden ringförmigen Rohrturmsegments und einem mittig dazwischenliegenden Zentralbereich, wobei am Zentralbereich schwenkbare Stützarme als Ausrichtungshilfe für die weiteren Paneele vorgesehen sind.

Bei dem erfindungsgemäßen Verfahren wird das ringförmige Rohrturmsegment unmittelbar im aufgestellten Zustand, also mit vertikal ausgerichteter Turmachse, aus mehreren Paneelen zusammengesetzt. Neben einer ringförmigen Aufstellhilfe ist lediglich ein Montageträger erforderlich, der bspw. als erfindungsgemäße Montagehilfe ausgebildet sein kann.

Die Aufstellhilfe ist zur Aufnahme des unteren Endes des zu montierenden Rohrturmsegmentes ausgebildet. Dazu weist die Aufstellhilfe bspw. eine, an die Formgebung des unteren Endes des zu montierenden Rohrturmsegmentes angepasste Aufnahme auf, wobei die Aufgabe als eine entsprechend ausgeformte Vertiefung oder als zum Eingriff in an der Unterseite des Rohrturmsegmentes bzw. dessen Paneelen befindlichen Öffnungen (bspw. Durchgangslöchern in einem Flansch) ausgebildete Vorsprünge oder Stifte (mit oder ohne Gewinde) aufweist. Es ist alternativ oder zusätzlich auch möglich, dass die Aufstellhilfe zur Aufnahme des unteren Endes des Rohrturmsegmentes bzw. dessen Paneelen dazu ausgebildet sind, dass die Paneele an der Aufstellhilfe lösbar befestigt werden können, bspw. durch eine Verschraubung. Die Aufstellhilfe kann als entsprechend ausgestaltete, gesonderte Montageschablone ausgebildet sein. Aufgrund der beschriebenen strukturellen Anforderung an die Aufstellhilfe ist es aber auch möglich, für das unterste Rohrturmsegment des zu errichtenden Turmbauwerks unmittelbar das Rohrturmfundament als Aufstellhilfe zu nutzen, womit ein an die Montage des Rohrturmsegmentes anschließendes Versetzen auf das Fundament entfallen kann. Bei den weiteren Rohrturmsegmenten kann das jeweils unter dem zu montierenden Rohrturmsegment angeordnete, bereits fertig montierte Rohrturmsegment als Aufstellhilfe verwendet werden, wobei bspw. ein Verbindungsflansch an der Oberseite des unteren, bereits fertig montierten Rohrturmsegments oder ein darauf für die Verbindung mit dem darüber liegenden Rohrturmsegment angeordnetes Verbindungselement (wie bspw. ein Torsionsring oder einen Ringflanschadapter) dann die eigentliche Aufstellhilfe bildet.

In einem ersten Schritt wird ein erstes ringsegmentförmiges Paneel mit seiner Unterseite auf der Aufstellhilfe aufgestellt. Je nach Ausgestaltung der Aufstellhilfe kann das erste Paneel auch mit der Aufstellhilfe verbunden werden. Abhängig von der Ausgestaltung des Paneels und/oder der Aufstellhilfe bzw. einer evtl. Verbindung zwischen Paneel und Aufstellhilfe wird das erste Paneel bereits in der Position, welche das erste Paneel auch im fertig montierten Rohrturmsegment einnimmt, gehalten. Falls erforderlich kann hierfür aber auch eine gesonderte Abstützung und/oder Abspannung vorgesehen werden.

Anschließend wird ein zweites ringförmiges Paneel mit dessen Unterseite auf die Aufstellhilfe aufgestellt. Sofern erforderlich kann auch dieses Paneel über eine Abstützung und/oder Abspannung in der gewünschten Position gehalten werden. Bei dem zweiten Paneel handelt es sich vorzugsweise um ein dem ersten Paneel im Wesentlichen gegenüberliegendes Paneel, d.h. die Anzahl der jeweils für die beiden Zwischenräume zwischen dem ersten und zweiten Paneel erforderlichen weiteren Paneele unterscheidet sich nur um eins oder ist identisch. Erstgenannter Fall gilt insbesondere für die Fälle, in denen das Rohrturmsegment durch eine ungerade Anzahl an Paneelen gebildet wird, während der letztgenannte Fall für ein Rohrturmsegment mit gerader Paneelanzahl bevorzugt wird.

Die beiden Paneele - also das erste und das zweite Paneel - werden anschließend mit einem Montageträger verbunden, sodass sich die beiden Paneele über den Montageträger stützen. Nach Installation des erfindungsgemäß vorgesehenen Montageträgers ist eine gesonderte Abstützung und/oder Abspannung des ersten und/oder zweiten Paneels nicht mehr erforderlich.

Die Paneele des Rohrturmsegmentes können an ihrer Ober- und Unterseite jeweils Verbindungsflansche aufweisen. Der Montageträger kann dann mit den Verbindungsflanschen an den Oberseiten der beiden Paneele verbunden sein. Dabei kann der Montageträger unmittelbar mit den Verbindungsflanschen, bspw. über eine Verschraubung, verbunden sein. Es ist aber auch möglich, dass zwischen den Verbindungsflanschen an den Oberseiten des ersten und zweiten Paneels und dem Montageträger jeweils Ringflanschadaptersegmente angeordnet sind. Diese Ringflanschadaptersegmente können bereits vor dem Aufstellen des ersten und zweiten Paneels an diesen befestigt sein. Nach der Montage sämtlicher Paneele des Rohrturmsegmentes können die Ringflanschadaptersegmente durch weitere Ringflanschadaptersegmente zu einem Ringflanschadapter vervollständigt werden.

Der Montageträger kann Vorrichtungen aufweisen, um sicherzustellen, dass die die Oberseiten des ersten und zweiten Paneels einen vorgegebenen Abstand zueinander aufweisen. Diese Vorrichtungen können Führungen oder Aktuatoren sein, mit denen die gewünschte Lage der beiden Paneele sicher- oder einzustellen ist. Der Montageträger kann weiterhin eine Libelle aufweisen, um die korrekte Lage und Ausrichtung der beiden Paneele leicht kontrollieren zu können.

Anschließend wird ein weiteres, zu einem bereits aufgestellten Paneel benachbartes Paneel mit dessen Unterseite auf die Aufstellhilfe aufgestellt und dann mit dem oder den benachbarten Paneel(en) verbunden. Die Verbindung zweier benachbarter Paneele erfolgt vorzugsweise durch eine Verschraubung an radial zur Achse des Rohrturmsegments ausgerichteten Vertikalflanschen. Es ist aber auch möglich, die Paneele anders, bspw. durch Verschweißen, miteinander zu verbinden.

Um die Ausrichtung des weiteren Paneels vor dessen Verbinden mit dem oder den benachbarten Paneel(en) zu erleichtern, ist vorgesehen, dass das weitere Paneel vorher zunächst an seiner Oberseite über eine Ausrichtungshilfe mit dem Montageträger verbunden wird. Bei der Ausrichtungshilfe handelt es sich um einen am Montageträger schwenkbar befestigten wenigstens einen Stellarm, der durch Verschwenken derart mit der Oberseite in Verbindung gebracht werden kann, dass die Position des weiteren Paneels gegenüber dem Montageträger - und damit gegenüber dem ersten und zweiten Paneel - gesichert werden kann. Weisen die Paneele Verbindungsflansche an ihrer Oberseite auf, können die Stellarme in dort vorgesehene Durchgangslöcher eingreifen. Ist der Stellarm weiterhin längeneinstellbar, kann die Position des weiteren Paneels ggf. noch korrigiert werden, um Fertigungstoleranzen ausgleichen zu können.

Die Anzahl der Stellarme ist vorzugsweise gleich oder größer als die Anzahl der weiteren Paneele, also der Anzahl aller Paneele des Rohrturmsegments minus dem ersten und dem zweiten Paneel. Zusätzlich kann als Ausrichtungshilfe ein umlaufender Stützkreis vorgesehen sein, an den die weiteren Paneele angelehnt werden können. Durch eine entsprechende Ausrichtungshilfe kann die letztendliche Position des weiteren Paneels bereits vor dessen Verbindung mit benachbarten Paneelen festgelegt werden, was die Herstellung der angesprochenen Verbindung regelmäßig erleichtert.

Um das Verbinden zweier benachbarter Paneele zu erleichtern und insbesondere um Aufwändige Gerüstkonstruktionen vermeiden zu können, ist vorgesehen, eine mit dem Montageträger verbundene, wenigstens vertikal verfahrbare Arbeitsbühne zu verwenden, mit der die Verbindungsbereiche zweier benachbarter Paneele vertikal abgefahren werden können, um die gewünschte Verbindung herzustellen. Um die Arbeitsbühne variabel für jede Verbindung zwischen benachbarten Paneelen einsetzen zu können, ist es bevorzugt, wenn die Arbeitsbühne um die Achse des Rohrturmsegments drehbar oder auf einer Kreisbahn um diese Achse verfahrbar ist. Insbesondere bei konisch geformten Rohrturmsegmenten ist es vorteilhaft, wenn die Arbeitsbühne in radialer Richtung zur Achse des Rohrturmsegements verfahrbar oder ausfahrbar ist. Dadurch kann sichergestellt werden, dass insbesondere auch bei konisch geformten Rohrturmsegmenten die Verbindungsbereiche zweier benachbarter Paneele über die gesamte Höhe des Rohrturmsegments von der Arbeitsbühne gut erreichbar sind.

Sind sämtliche Paneele des Rohrturmsegmentes auf der Aufstellhilfe aufgestellt und jeweils mit den benachbarten Paneelen verbunden kann der Montageträger - ggf. zusammen mit daran angeordneten Elementen, wie einer Arbeitsbühne - von dem Rohrturmsegment entfernt werden. Dazu kann der Montageträger insbesondere nach oben von dem Rohrturmsegment gehoben werden. Muss das Rohrturmsegment nach erfolgter Montage noch von der Aufstellhilfe auf den letztendlichen Aufstellort gehoben werden, kann der Montageträger aber auch noch als Transporthilfe dienen, bspw. indem ein Kran zum Anheben des Rohrturmsegmentes an dem Montageträger angreift.

Sofern erforderlich kann der Ringflanschadapter - wenn bspw. zwischen Montageträger und Verbindungsflanschen an der Oberseite des ersten und zweien Paneels bereits Ringflanschadaptersegmente vorgesehenen sind - vor oder nach Entfernen des Montageträgers durch weitere Ringflanschadaptersegmente vervollständigt werden. Ist dies nicht der Fall, kann nach Entfernen des Montageträgers - sofern erforderlich - ein ein- oder mehrteiliger Ringflanschadapter oder ein sonstiger Adapter an der Oberseite des Rohrturmsegments befestigt werden.

Die erfindungsgemäße Montagehilfe ist zur Verwendung im erfindungsgemäßen Verfahren ausgebildet, weshalb zur Erläuterung der Montagehilfe auch auf die vorstehenden Ausführungen verwiesen wird.

Die Montagehilfe umfasst einen Montageträger, der wenigstens ein Paar voneinander beabstandete Anbindungspunkte zur Befestigung an der Oberseite des ersten und zweiten Paneels eines aus mehr als drei ringsegmentförmigen Paneelen aufzubauenden ringförmigen Rohrturmsegments aufweist. Mittig zwischen den beiden Anbindungspunkten eines Paares liegt der Zentralbereich des Montageträgers. An diesem Zentralbereich sind die schwenkbaren Stellarme als Ausrichtungshilfe für die weiteren Paneele vorgesehen.

Die Anzahl der Stellarme ist vorzugsweise gleich oder größer als die Anzahl der weiteren Paneele (der Anzahl aller Paneele des Rohrturmsegments minus dem ersten und dem zweiten Paneel). Dadurch können sämtliche Paneele eines Rohrturmsegmentes bis zum Abschluss der Montage mit dem Montageträger verbunden bleiben und in Position gehalten werden, was die Montage der einzelnen Paneele erleichtert.

Um die Montagehilfe bei verschiedenen Rohrturmsegmenten mit unterschiedlichem Durchmesser an deren Oberseite - wie dies bspw. bei den Rohrturmsegmenten eines aus mehreren Rohrturmsegmenten gebildeten konusförmigen Turmabschnitts regelmäßig der Fall ist - verwenden zu können, kann symmetrisch um den Zentralbereich ein zweites Paar von Anbindungspunkten vorgesehen sein, wobei die Anbindungspunkte dieses Paares einen anderen Abstand voneinander aufweisen als das wenigstens eine andere Paar von Anbindungspunkten. Die Montagehilfe lässt sich so für Rohrturmsegmente mit wenigstens zwei unterschiedlichen Durchmessern an deren Oberseite verwenden. Die Stellarme sind in diesem Fall bevorzugt längeneinstellbar, um an den jeweiligen Durchmesser des zu montierenden Rohrturmsegments angepasst werden zu können.

Es ist bevorzugt, wenn am Zentralbereich des Montageträgers eine Traverse drehbar befestigt ist, wobei die Länge der Traverse vorzugsweise kleiner ist als der kleinste Abstand eines Paares von Anbindungspunkten. Durch letzteres kann gewährleistet werden, dass die Montagehilfe nach Fertigstellung eines Rohrturmsegments nach oben aus diesem Herausgezogen werden kann.

Vorzugsweise ist an der Traverse eine Arbeitsbühne befestigt, die vertikal zur Traverse verfahrbar ist. Weiter vorzugsweise ist die Arbeitsbühne auch horizontal entlang der Traverse verfahrbar und/oder in eine dazu parallele Richtung ausfahrbar. Durch die Verfahr- bzw. Ausfahrbarkeit kann gewährleistet werden, auch bei konisch geformten Rohrturmsegmenten die Verbindungsbereiche zweier benachbarter Paneele über die gesamte Höhe des Rohrturmsegments von der Arbeitsbühne aus gut erreichen zu können. Ist die Länge der Arbeitsbühne zumindest im eingefahrenen Zustand auch kleiner als der kleinste Abstand eines Paares von Anbindungspunkten, kann die Montagehilfe weiterhin nach oben aus einem fertiggestellten Rohrsegment entfernt werden.

Alternativ zum Vorsehen einer Traverse kann am Montageträger um den Zentralbereich auch eine Kreisbahn für eine Arbeitsbühne befestigt sein, wobei der Durchmesser der Kreisbahn vorzugsweise kleiner ist als der kleinste Abstand eines Paares von Anbindungspunkten. Die Montagehilfe kann so nach Fertigstellung des Rohrturmsegmentes nach oben hin abgenommen werden. Die Kreisbahn kann zusätzlich auch als umlaufender Stützkreis, also als Ausrichtungshilfe für die Paneele, dienen.

Vorzugsweise ist an der Kreisbahn eine Arbeitsbühne befestigt, die vertikal zur Kreisbahn verfahrbar ist. Weiter vorzugsweise ist die Arbeitsbühne in radialer Richtung zur Achse der Kreisbahn ausfahrbar. Durch diese Ausfahrbarkeit kann gewährleistet werden, auch bei konisch geformten Rohrturmsegmenten die Verbindungsbereiche zweier benachbarter Paneele über die gesamte Höhe des Rohrturmsegments von der Arbeitsbühne aus gut erreichen zu können. Ist die Arbeitsbühne zumindest im eingefahrenen Zustand auch entsprechend ausgebildet, kann die Montagehilfe auch mit der Arbeitsbühne weiterhin nach oben aus einem fertiggestellten Rohrsegment entfernt werden.

Die Paneele des gemäß dem erfindungsgemäßen Verfahren zu montierenden Rohrturmsegmentes sind vorzugsweise aus Stahlblech gefertigt. Das Stahlblech kann eine Dicke von 26 mm und 100 mm, vorzugsweise von 30 mm bis 50 mm aufweisen. Wenigstens ein Teil der Flansche eines Paneels kann durch Abkanten des Stahlblechs gebildet sein.

Die zu montierenden Rohrturmsegmente weisen vorzugsweise einen Durchmesser von größer als 4,5 m auf, weiter vorzugsweise von 7 m oder mehr auf. Der Durchmesser bezieht sich dabei auf den größten Durchmesser eines Rohrturmsegmentes, bei konisch geformten Rohrturmsegmenten also auf den größeren der beiden Durchmesser an Ober- und Unterseite.

Die Höhe des zu montierenden Rohrturmsegments kann 10 m oder mehr, vorzugweise 20 m oder mehr betragen.

Die Erfindung wird nun anhand vorteilhafter Ausführungsformen unter Bezugnahme auf die beigefügten Zeichnungen beispielhaft beschrieben. Es zeigen:
- Figuren 1a-k:: die einzelnen Schritte des erfindungsgemäßen Verfahrens mit einem ersten Ausführungsbeispiel einer erfindungsgemäßen Montagehilfe;
- Figuren 2a, b:: Detaildarstellungen zu Figuren 1a-k;
- Figuren 3a, b:: ein zweites Ausführungsbeispiel einer erfindungsgemäßen Montagehilfe; und
- Figuren 4a-c:: ein Ausführungsbeispiel einer bevorzugten Arbeitsbühne für die Montagehilfe gemäß Figuren 1a-k, 2a,b oder 3a, b.

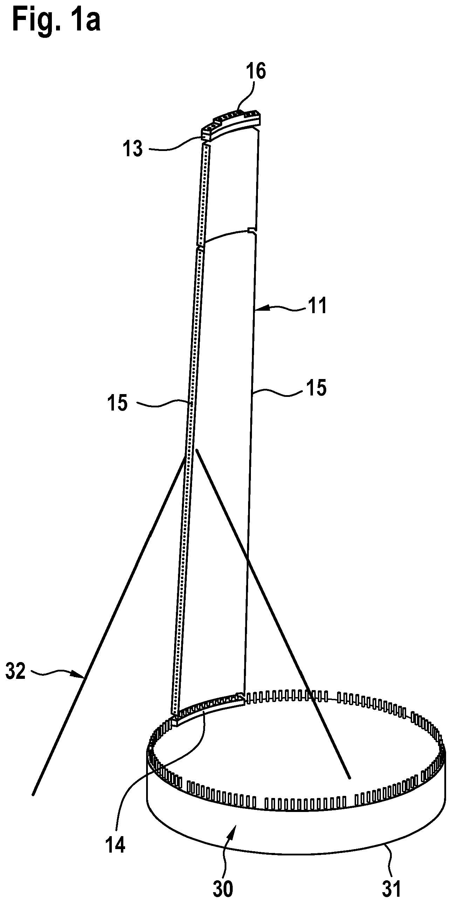

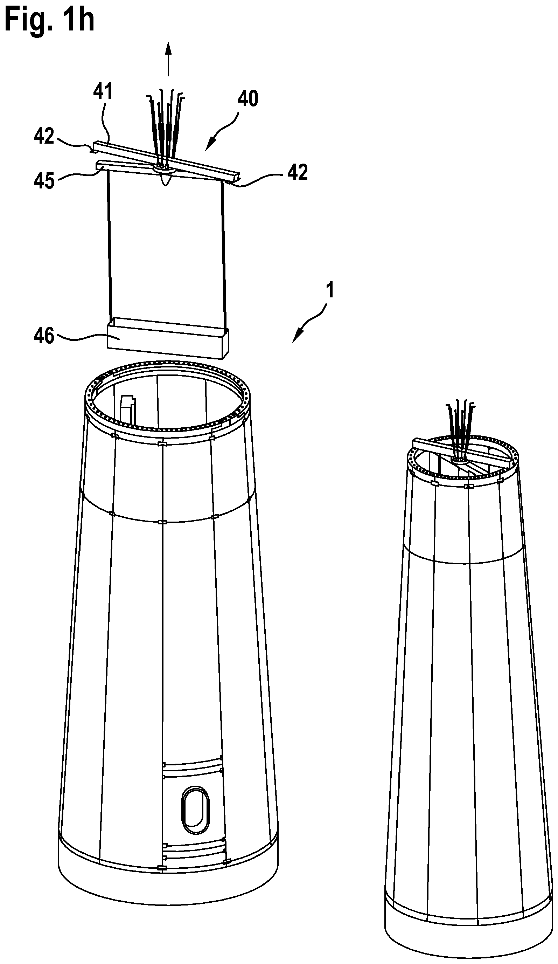

Anhand der Figuren 1a bis 1k werden die einzelnen Verfahrensschritte des erfindungsgemäßen Verfahrens zur Montage von ringförmigen Rohrturmsegmenten 1, 2 aus jeweils zehn ringsegmentförmigen Paneelen 10, 11, 12, 20, 21, 22 erläutert. Beide Rohrturmsegmente 1, 2 sind dabei konisch geformt.

Zur Montage des ersten Rohrturmsegments 1 ist eine erste Aufstellhilfe 30 vorgesehen, die zur Aufnahme der Unterseite des ersten Rohrturmsegmentes 1 bzw. dessen ringsegmentförmigen Paneelen 10, 11, 12 ausgebildet ist. Bei der ersten Aufstellhilfe 30 handelt es sich um das Fundament des mit Hilfe des Rohrturmsegments 1 zu errichtenden Rohrturmbauwerks als Turm für eine Windenergieanlage. An der Oberseite der Aufstellhilfe 30 ragen Gewindestifte 31 hervor, an denen die Paneele 10, 11, 12 befestigt werden können. Die Paneele 10, 11, 12 weisen hierzu an ihrer Ober- und Unterseite für eine entsprechende Verbindung jeweils horizontal aufgerichtete Verbindungsflansche 13, 14 auf. Darüber hinaus sind an den beiden übrigen Kanten der Paneele 10, 11, 12 Vertikalflansche 15 vorgesehen, über die zwei benachbarte Paneele 10, 11, 12 des Rohrturmsegments 1 miteinander verbunden werden können. Die Paneele 10, 11, 12 sind aus Stahlblech gefertigt, wobei die Vertikalflansche 15 durch Abkanten des Stahlblechs, die Verbindungsflansche 13, 14 durch angeschweißte Bauteile gebildet werden.

Wie in Figur 1a dargestellt, wird zunächst ein erstes Paneel 11 des ersten Rohrturmsegmentes 1 auf die Aufstellhilfe 30 aufgestellt. Dazu wird das Paneel 11 auf die Gewindestifte 31 der Aufbauhilfe 30 an der letztendlich gewünschten Position des ersten Paneels 11 im fertiggestellten Rohrturmsegment 1 aufgesetzt und mit Muttern dort gesichert. Sofern die Verschraubung an der Aufbauhilfe 30 nicht ausreicht, um die Position des ersten Paneels 11 kurzzeitig zu sichern, kann hilfsweise eine Abspannung 32 vorgesehen sein.

Das erste Paneel 11 weist an seiner Oberseite einen mit dem dort angeordneten Verbindungsflansch 13 verbundenen Ringflanschadaptersegment 16 auf.

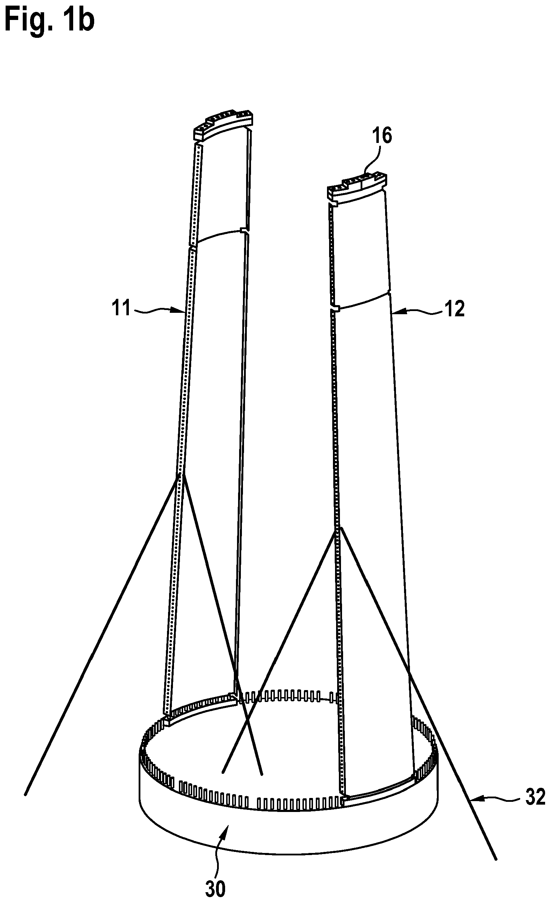

Im nächsten Schritt (vgl. Figur 1b) wird das dem ersten Paneel 11 gegenüberliegende zweite Paneel 12 auf die Aufstellhilfe 30 aufgestellt und dort verschraubt. Auch das zweite Paneel 12 kann - sofern erforderlich - durch eine Abspannung 32 in seiner Position gesichert werden. Auch das zweite Paneel 12 weist an seiner Oberseite ein Ringflanschadaptersegment 16 auf.

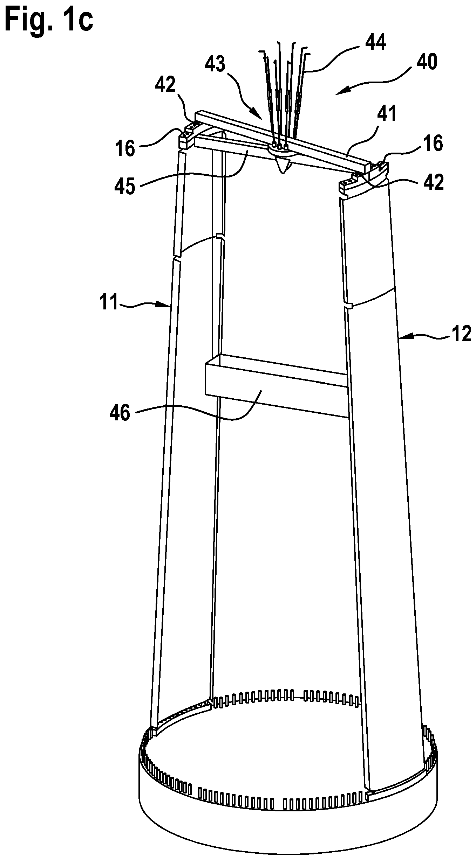

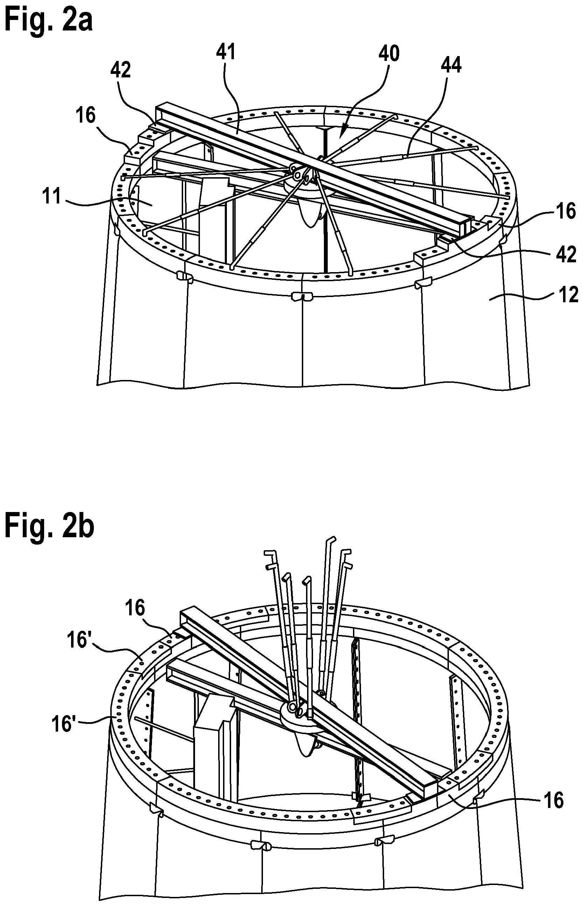

Anschließend (vgl. Figur 1c) werden die Oberseiten des ersten und des zweiten Paneels 11, 12 über einen Montageträger 41 derart miteinander verbunden, dass sich die beiden Paneele 11, 12 so ausreichend gegenseitig stützen, dass die Abspannung 32 (vgl. Figuren 1a, 1b) nicht mehr erforderlich ist und entfernt werden kann. Der Montageträger 41 ist Teil einer Montagehilfe 40 und über die Ringflanschadaptersegmente 16 an den Verbindungsflanschen 13 an den Oberseiten des ersten und zweiten Paneels 11, 12 fest mit diesen verbunden. Dazu weist der Montageträger 41 ein Paar von Anbindungspunkten 42 auf, wobei je ein Anbindungspunkt 42 im Bereich eines Endes des Montageträgers angeordnet ist (vgl. auch Detaildarstellung in Figur 2). Aufgrund der definierten Anbindungspunkte 42 wird sichergestellt, dass sich die beiden Paneele 11, 12 in der für die weitere Montage des Rohrturmsegments 1 gewünschten Lage zueinander befinden.

Mitten zwischen den beiden Anbindungspunkten 42 des Montageträgers 41 ist der Zentralbereich 43 des Montageträgers 41. An diesem Zentralbereich 43 sind acht schwenkbare Stellarme 44 als Ausrichtungshilfe für die weiteren Paneele 10 - d.h. die nach dem ersten und zweiten Paneel 11, 12 aufzustellende Paneele - vorgesehen. Ein Stellarm 44 kann, nachdem ein weiteres Paneel 10 auf die Aufstellhilfe 30 aufgestellt wurde, heruntergeschwenkt und in Eingriff mit dem Verbindungsflansch 13 auf der Oberseite des weiteren Paneels 10 gebracht werden, um dieses Paneel 10 gegenüber den aufgestellten Paneelen 10, 11, 12 ausgerichtet zu werden (vgl. Figur 2a). Die Stellarme 44 sind dabei längenverstellbar, um evtl. Fertigungstoleranzen ausgleichen zu können. Die Anzahl der Stellarme 44 entspricht der Anzahl der weiteren Paneele 10, nämlich acht.

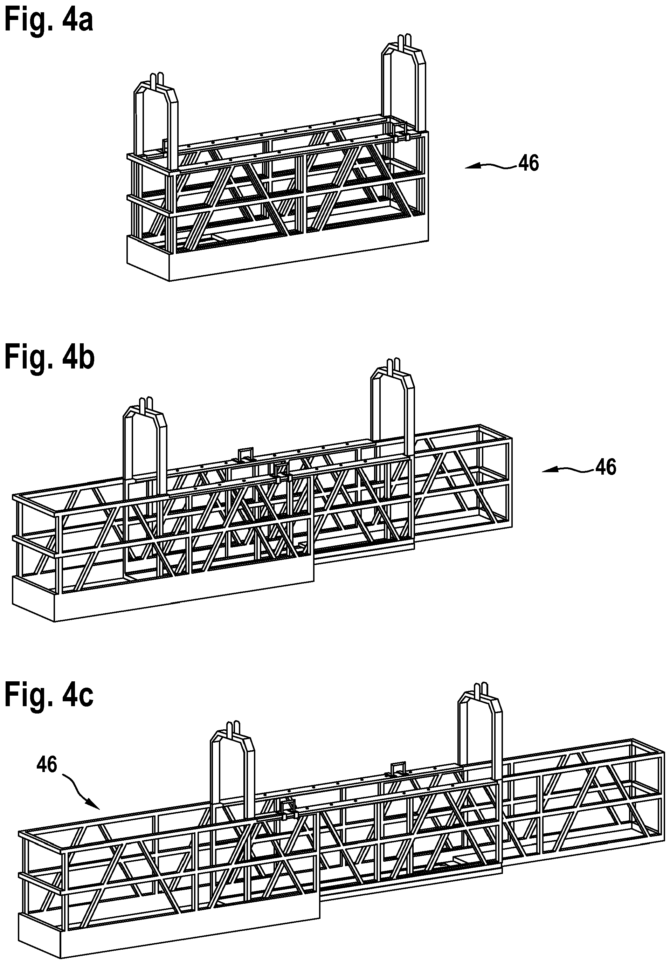

Weiterhin ist am Zentralbereich 43 des Montageträgers 41 eine Traverse 45 um eine vertikale Achse drehbar befestigt, wobei die Länge der Traverse 45 kleiner ist als der Abstand der beiden Anbindungspunkte 42 des Montageträgers 41. An der Traverse 45 ist wiederum eine Arbeitsbühne 46 angeordnet, die vertikal verfahrbar ist. Die Arbeitsbühne 46 ist dabei gemäß den Figuren 4a-c ausgebildet, aus denen unmittelbar ersichtlich ist, dass die Arbeitsbühne 46 in ihrer Längsrichtung ausfahrbar ausgestaltet ist. Diese Ausfahrbarkeit bietet den Vorteil, dass die Vertikalflansche 17 der Paneele 10, 11, 12 auf jeder Höhe des konisch geformten Rohrturmsegments 1 gut von der Arbeitsbühne 46 aus erreicht werden können. Im eingefahrenen Zustand (Figur 4a) ist die Länge der Arbeitsbühne 46 jedoch kleiner als der Abstand der beiden Anbindungspunkte 42 des Montageträgers 41.

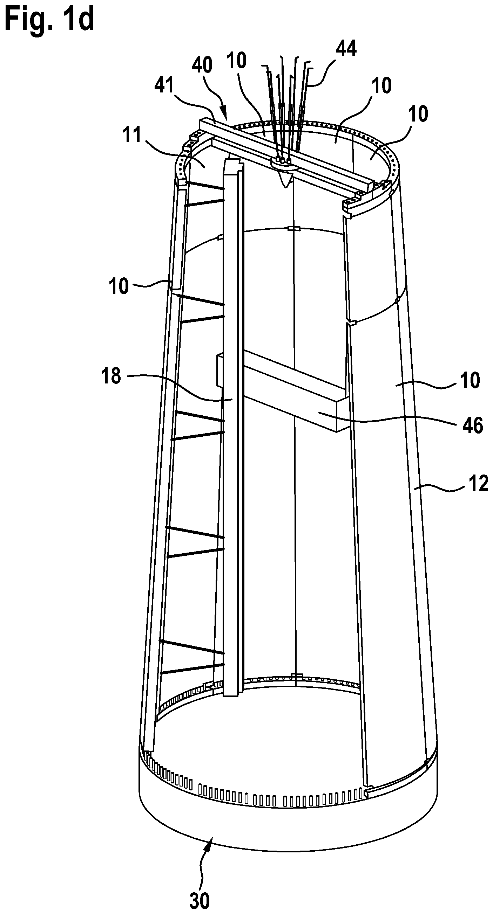

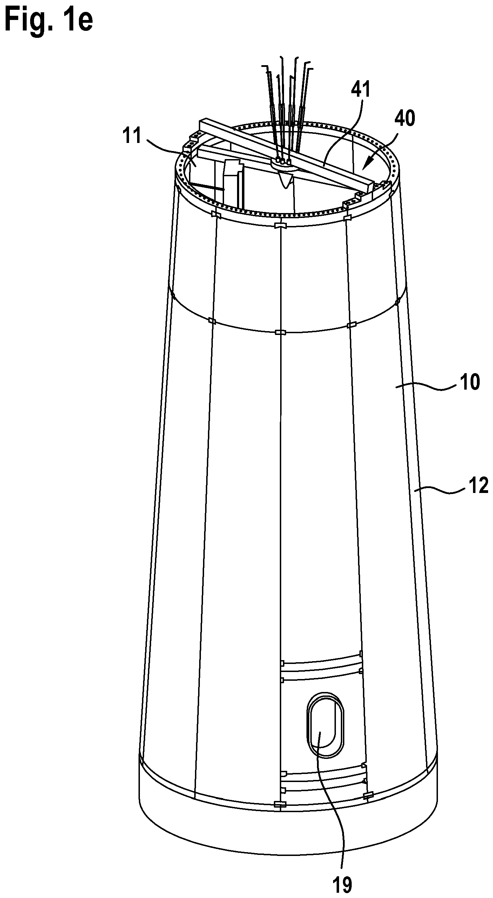

Anschließend werden nach und nach weitere Paneele 10 auf die Aufstellhilfe aufgestellt und jeweils mit bereits aufgestellten benachbarten Paneelen 10, 11, 12 entlang der Vertikalflansche 17 durch Verschraubung miteinander verbunden (vgl. Figuren 1d und 1e). Um das Herstellen der Verschraubung zu erleichtern, kann jedes neu aufgestellte Paneel 10 zunächst über einen Stellarm 44 mit dem Montageträger 41 verbunden (vgl. Figur 2a) und ggf. mit Hilfe deren Längenverstellbarkeit so ausgerichtet werden, dass die für die Verschraubung in den Vertikalflanschen 17 vorgesehenen Bohrungen fluchten. Die Verschraubung selbst kann von der Arbeitsbühne 46 aus hergestellt werden, die dazu die Vertikalflansche 17 in ihre Höhe abfahren und ggf. der Länge nach ausgefahren werden kann, um die Vertikalflansche 17 über ihre gesamte Länge gut erreichen zu können.

Es ist möglich, dass einzelne Paneele 10 bereits während der Montage des Rohrturmsegments 1 bspw. Anbauten 18 oder Türausschnitte 19 aufweisen.

Sind sämtliche Paneele 10, 11, 12 aufgestellt und untereinander verbunden, werden die an der Oberseite der Paneele 10, 11 bereits vorhandenen Ringflanschadaptersegmente 16 durch weitere Ringflanschadaptersegmente 16' ergänzt um einen Vollständigen Ringflanschadapter zu bilden (vgl. Figur 2b), auf dem eine weiteres Rohrturmsegment 2 befestigt werden kann.

Das zweite Rohrturmsegment 2 wird im Wesentlichen analog zum ersten Rohrturmsegment 1 montiert. Anstelle der Montage unmittelbar auf einem Fundament als Aufstellhilfe 30 erfolgt die Montage jedoch auf einer gesonderten Montageschablone als Aufstellhilfe 35. Alternativ dazu kann das zweite Rohrturmsegment 2 auch unmittelbar auf dem bereits auf dem Fundament errichteten ersten Rohrturmsegment 1 montiert werden.

Auch wenn die Montage des zweiten Rohrturmsegments 2 auf der gesonderten Aufstellhilfe 35 in den Figuren 1a-k als der Montage des ersten Rohrturmsegments 1 nachfolgend dargestellt ist, kann die Montage des zweiten Rohrturmsegments 2 auch gleichzeitig zu der des ersten Rohrturmsegments 1 durchgeführt werden.

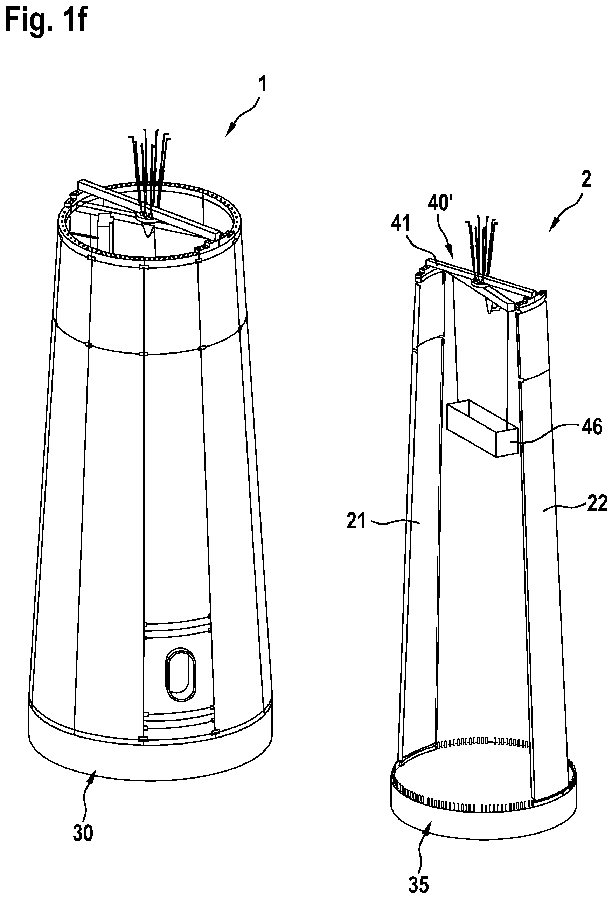

Auch bei der Montage des zweiten Rohrturmsegments 2 werden zunächst das erste und zweite Paneel 21, 22 auf der Aufstellhilfe 35 aufgestellt und durch den Montageträger 41 einer Montagehilfe 40' miteinander verbunden, wobei zwischen den Paneelen 21, 22 und Montageträger 41 jedoch keine Ringflanschadaptersegmente vorgesehen sind (Figur 1f). Die Montagehilfe 40' ist dabei analog zu der Montagehilfe 40 für das erste Rohrturmsegment 1 ausgebildet und lediglich an die abweichenden Dimensionen des zweiten Rohrturmsegments 2 angepasst. Im Übrigen wird auf die vorstehenden Ausführungen zur Montagehilfe 40 verwiesen.

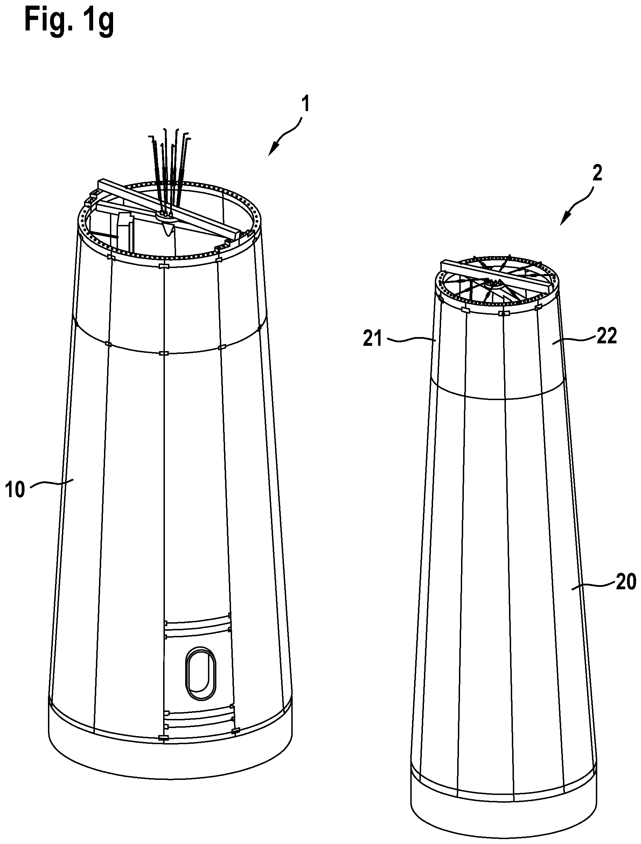

Die Montage der weiteren Paneele 20 des zweiten Rohrturmsegments 2 verläuft ebenso analog zu der Montage der weiteren Paneele 10 (Figur 1g), weshalb auch hier auf die vorstehenden Erläuterungen verwiesen wird.

In einem nächsten Schritt (vgl. Figur 4h) wird die Montagehilfe 40 für das erste Rohrturmsegment 1 entfernt. Da die Länge sowohl die Traverse 45 als auch die Arbeitsbühne 46 zumindest im eingefahrenen Zustand geringer ist als der Abstand zwischen den beiden Anbindungspunkten 42 am Montageträger 41 lässt sich die Montagehilfe 40 mitsamt der Arbeitsbühne 46 nach oben aus dem ersten Rohrturmsegment 1 entfernen.

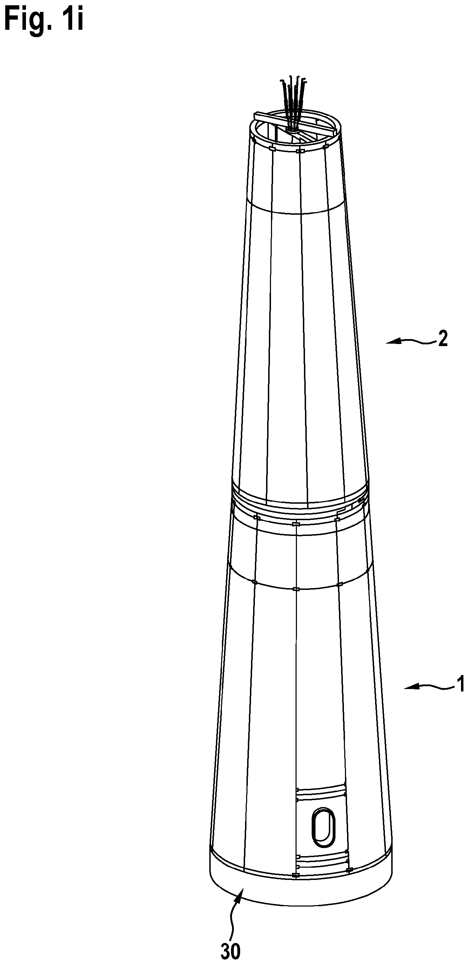

Anschließend kann das zweite Rohrturmsegment 2 als Ganzes von der Montageschablone bzw. Aufstellhilfe 35 angehoben und auf das erste Rohrturmsegment 1 aufgesetzt und mit diesem bzw. dem an der Oberseite des ersten Rohrturmsegments 1 angeordneten Ringflanschadapter verschraubt und so befestigt werden (siehe Figur 1i). Dabei kann das zweite Rohrturmsegment 2 über die Montagehilfe 40 angehoben werden, d.h. ein dafür vorgesehener Kran greift an der Montagehilfe 40 und nicht unmittelbar an dem Rohrturmsegment 2.

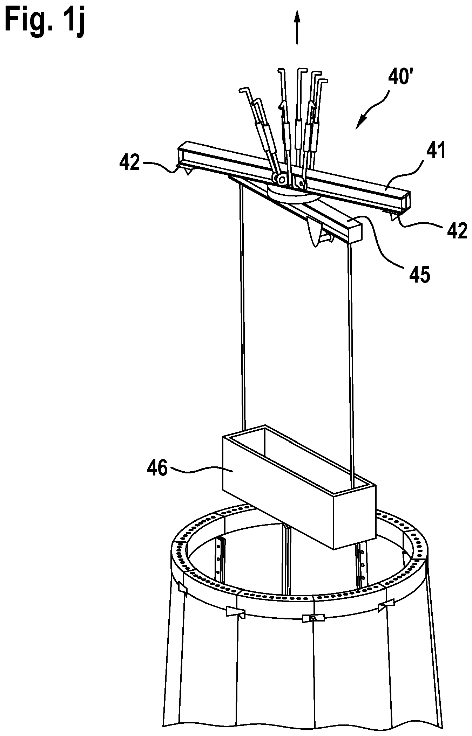

Die Montagehilfe 40' kann anschließend ebenfalls einfach nach oben entnommen werden, da auch hier die Länge der Traverse 45 bzw. der ggf. vollständig eingefahrenen Arbeitsbühne 46 geringer ist als der Abstand der beiden Anbindungspunkte 42 am Montageträger 41 (siehe Figur 1j).

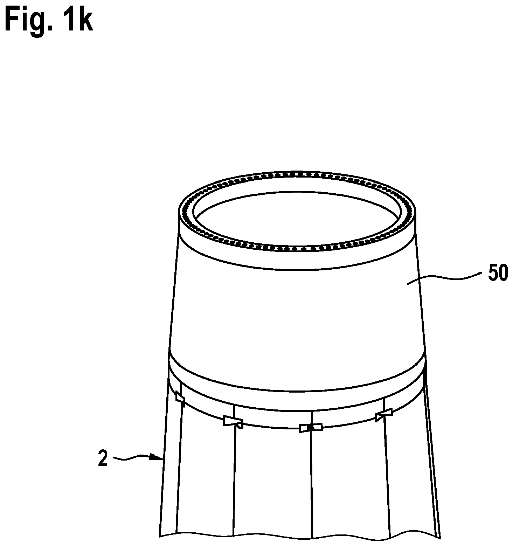

Abschließend wird noch ein Adaptermodul 50 aufgesetzt (siehe Figur 1k), auf dem weitere Rohrturmsegmente (nicht dargestellt) angeordnet werden können, wobei diese weiteren Rohrturmsegmente insbesondere als rohrförmige Bauteile vorgefertigter Rohrturmsegmente mit einem maximalen Durchmesser von 4,5 m sein können.

Im dargestellten Ausführungsbeispiel weist das erste Rohrturmsegment 1 einen unteren Durchmesser von 9,6 m und einen oberen Durchmesser von 7,1 m auf. Das zweite Rohrturmsegment 2 weist einen entsprechenden unteren Durchmesser, sowie einen oberen Durchmesser von 4,6 m auf. Das Adaptermodul 50 reduziert diesen Durchmesser weiter auf 4,5 m.

Die Höhe der Rohrturmsegmente 1, 2 beträgt im dargestellten Ausführungsbeispiel jeweils 20 m. Die einzelnen Paneele 10, 11, 12, 20, 21, 22 sind aus Stahlblech mit einer Dicke von 45 mm gefertigt.

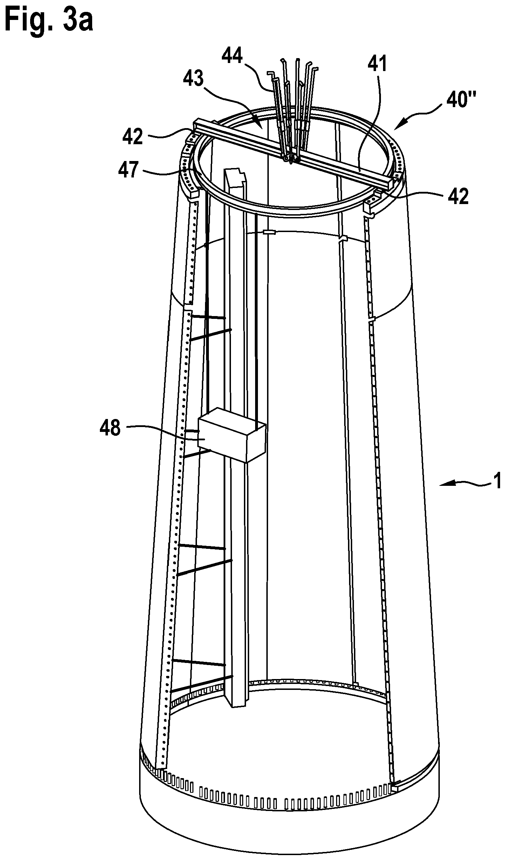

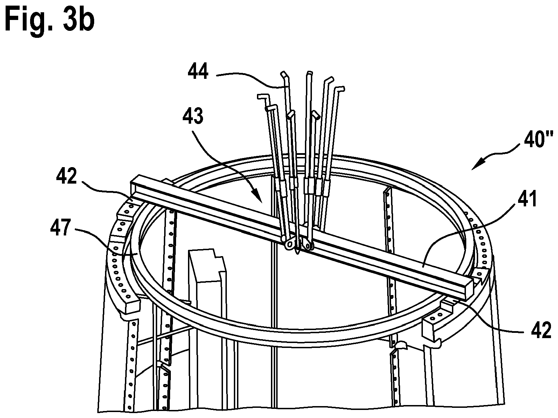

In Figuren 3a, b ist eine alternative Ausführungsform einer erfindungsgemäßen Montagehilfe 40" dargestellt.

Die Montagehilfe 40" weist ebenso wie die Montagehilfen 40, 40' aus Figuren 1a-k und 2a, b einen Montageträger 41 mit einem Paar von Anbindungspunkten 42 auf. Mittig zwischen den Anbindungspunkten 42 befindet sich der Zentralbereich 43 des Montageträgers 41, an dem schwenkbare und längeneinstellbare Stellarme 44 angeordnet sind.

Anstelle einer Traverse 45 (vgl. Figuren 1a-k und 2a, b) weist die Montagehilfe 40" gemäß Figuren 3a, b jedoch eine um den Zentralbereich 43 des Montageträgers 41 angeordnete Kreisbahn 47 auf. Der Durchmesser der Kreisbahn 47 ist dabei kleiner als der Abstand zwischen den beiden Anbindungspunkten 42. Die Montagehilfe 40" kann somit weiterhin nach oben aus einem mit deren Hilfe fertiggestellten Rohrturmsegment 1, 2 entnommen werden. Gleichzeitig kann die Kreisbahn 47 neben den Stellarmen 44 noch als zusätzliche Ausrichtungshilfe für die Paneele 10, 11, 12, 20, 21, 22 in Form eines umlaufenden Stützkreises genutzt werden.

An der Kreisbahn 47 ist weiterhin eine Arbeitsbühne 48 angeordnet, die sowohl entlang der Kreisbahn 47 als auch in vertikaler Richtung verfahrbar ist. Weiterhin ist die Arbeitsbühne 48 in radialer Richtung zur Achse der Kreisbahn bzw. zur Rohrturmachse derart ausfahrbar, dass auch bei konisch geformten Rohrturmsegmenten 1, 2 die Verbindungsbereiche zweier benachbarter Paneele 10, 11, 12, 20, 21, 22 über die gesamte Höhe des Rohrturmsegments 1, 2 gut erreicht werden können.

## Patentansprüche

1. Verfahren zur Montage eines ringförmigen Rohrturmsegmentes (1, 2) aus wenigstens drei ringsegmentförmigen Paneelen (10, 11, 12, 20, 21, 22) auf einer horizontal ausgerichteten, ringförmigen Aufstellhilfe (30, 35), die zur Aufnahme des unteren Endes des Rohrturmsegmentes (1, 2) ausgebildet ist, mit den Schritten:
a) Aufstellen eines ersten ringsegmentförmigen Paneels (11, 21) mit dessen Unterseite auf die Aufstellhilfe (30, 35);
b) Aufstellen eines zweiten ringsegmentförmigen Paneels (12, 22) mit dessen Unterseite auf die Aufstellhilfe (30, 35);
c) Verbinden der Oberseiten des ersten und zweiten Paneels (11, 12, 21, 22) mit einem Montageträger (41), sodass sich die beiden Paneele (11, 12, 21, 22) über den Montageträger gegenseitig stützen;
d) Aufstellen eines zu dem einem bereits aufgestellten Paneel (10, 11, 12, 20, 21, 22) benachbarten weiteren Paneels (10, 20) mit dessen Unterseite auf die Aufstellhilfe (30, 35);
e) Verbinden des weiteren Paneel (10) an seiner Oberseite über eine Ausrichtungshilfe mit dem Montageträger (41), wobei die Ausrichtungshilfe am Montageträger (41) befestigte, schwenkbare Stellarme (44) sind;
f) Verbinden des weiteren Paneels (10) mit dem oder den benachbarten Paneel(en) (10, 11, 12, 20, 21, 22);
g) Wiederholen der Schritte (d) und (e) bis das Rohrturmsegment (1, 2) vollständig ist; und
h) Entfernen des Montageträgers (41).

2. Verfahren nach Anspruch 1,
**dadurch gekennzeichnet, dass**
die Stellarme (44) längenverstellbar sind.

3. Verfahren nach einem der vorhergehenden Ansprüche,
**dadurch gekennzeichnet, dass**
das Verbindung zweier benachbarter Paneele (10, 11, 12, 20, 21, 22) durch Verschraubung an radial zur Achse des Rohrturmsegments (1, 2) ausgerichteten Vertikalflanschen (17) erfolgt.

4. Verfahren nach einem der vorhergehenden Ansprüche,
**dadurch gekennzeichnet, dass**
zum Verbinden zweier benachbarter Paneele (10, 11, 12, 20, 21, 22) eine mit dem Montageträger (41) verbundene, wenigstens vertikal verfahrbare Arbeitsbühne (46, 48) zu verwenden, wobei die Arbeitsbühne (46, 48) vorzugsweise um die Achse des Rohrturmsegments (1, 2) drehbar oder auf einer Kreisbahn um diese Achse verfahrbar ist, wobei die Arbeitsbühne (46, 48) weiter vorzugsweise in radialer Richtung zur Achse des Rohrturmsegments (1, 2) verfahrbar oder ausfahrbar ist.

5. Verfahren nach einem der vorhergehenden Ansprüche,
**dadurch gekennzeichnet, dass**
die Paneele (10, 11, 12, 20, 21, 22) an ihrer Oberseite Verbindungsflansche (14) aufweisen und zwischen den Verbindungsflanschen (14) des ersten und zweiten Paneels (11, 12, 21, 22) und dem Montageträger (41) jeweils Ringflanschadaptersegmente (16) angeordnet sind, und vor oder nach dem Entfernen des Montageträgers (41) der Ringflanschadapter durch weitere Ringflanschadaptersegmente (16) vervollständigt wird.

6. Verfahren nach einem der vorhergehenden Ansprüche,
**dadurch gekennzeichnet, dass**
die Aufstellhilfe (30, 35) eine Montageschablone, ein Rohrturmfundament oder ein unter dem zu montierenden Rohrturmsegment (2) angeordnetes Rohrturmsegment (1) ist.

7. Montagehilfe (40) zur Verwendung in einem Montageverfahren gemäß einem der Ansprüche 1 bis 6, mit einem Montageträger (41) mit wenigstens einem Paar von voneinander beabstandeter Anbindungspunkte (42) zur Befestigung an der Oberseite des ersten und zweiten Paneels (11, 12, 21, 22) eines aus mehr als drei ringsegmentförmigen Paneelen (10, 11, 12, 20, 21, 22) aufzubauenden ringförmigen Rohrturmsegments (1, 2) und einem mittig dazwischenliegenden Zentralbereich (43), wobei am Zentralbereich (43) schwenkbare Stellarme (44) als Ausrichtungshilfe für die weiteren Paneele (10, 20) vorgesehen sind.

8. Montagehilfe nach Anspruch 7,
**dadurch gekennzeichnet, dass**
die Anzahl der Stellarme (44) gleich oder größer der Anzahl der weiteren Paneele (10, 20) ist.

9. Montagehilfe nach Anspruch 7 oder 8,
**dadurch gekennzeichnet, dass**
die Stellarme (44) längeneinstellbar sind.

10. Montagehilfe nach einem der Ansprüche 7 bis 9,
**dadurch gekennzeichnet, dass**
die Montagehilfe (40) ein symmetrisch um den Zentralbereich (43) angeordnetes zweites Paar von Anbindungspunkten (42) aufweist, die einen anderen Abstand voneinander aufweisen als das erste Paar von Anbindungspunkten (42).

11. Montagehilfe nach einem der Ansprüche 7 bis 10,
**dadurch gekennzeichnet, dass**
am Zentralbereich (43) des Montageträgers (41) eine Traverse (45) für eine Arbeitsbühne (46) drehbar befestigt ist, wobei die Länge der Traverse (45) vorzugsweise kleiner ist als der kleinste Abstand eines Paares von Anbindungspunkten (42).

12. Montagehilfe nach Anspruch 11,
**dadurch gekennzeichnet, dass**
an der Traverse (45) eine Arbeitsbühne (46) befestigt ist, die vertikal zur Traverse (45) verfahrbar ist, wobei die Arbeitsbühne (46) vorzugsweise horizontal entlang der Traverse (45) verfahrbar und/oder in eine dazu parallele Richtung ausfahrbar ist.

13. Montagehilfe nach einem der Ansprüche 7 bis 10,
**dadurch gekennzeichnet, dass**
am Montageträger (41) um den Zentralbereich (43) eine Kreisbahn (47) für eine Arbeitsbühne (48) befestigt ist, wobei der Durchmesser der Kreisbahn (47) vorzugsweise kleiner ist als der kleinste Abstand eines Paares von Anbindungspunkten (42).

14. Montagehilfe nach Anspruch 13,
**dadurch gekennzeichnet, dass**
an der Kreisbahn (47) eine Arbeitsbühne (48) befestigt ist, die vertikal zur Kreisbahn (47) verfahrbar ist, wobei die Arbeitsbühne (48) vorzugsweise in radialer Richtung zur Achse der Kreisbahn (47) ausfahrbar ist.

## Claims

1. Method for mounting an annular tubular tower segment (1, 2) consisting of at least three ring segment-shaped panels (10, 11, 12, 20, 21, 22) on a horizontally oriented, annular erection aid (30, 35) which is designed for receiving the lower end of the tubular tower segment (1, 2), comprising the following steps:
a) erecting a first ring segment-shaped panel (11, 21) by its underside on the erection aid (30, 35);
b) erecting a second ring segment-shaped panel (12, 22) by its underside on the erection aid (30, 35);
c) connecting the upper sides of the first and second panel (11, 12, 21, 22) to a mounting support (41), with the result that the two panels (11, 12, 21, 22) are mutually supported via the mounting support;
d) erecting a further panel (10, 20) adjacent to the one already erected panel (10, 11, 12, 20, 21, 22) by its underside on the erection aid (30, 35);
e) connecting the further panel (10) at its upper side to the mounting support (41) via an orienting aid, wherein the orienting aid is constituted by pivotable positioning arms (44) fastened on the mounting support (41);
f) connecting the further panel (10) to the adjacent panel(s) (10, 11, 12, 20, 21, 22);
g) repeating the steps (d) and (e) until the tubular tower segment (1, 2) is complete; and
h) removing the mounting support (41).

2. Method according to Claim 1,
**characterized in that**
the positioning arms (44) are length-adjustable.

3. Method according to either of the preceding claims,
**characterized in that**
the connection of two adjacent panels (10, 11, 12, 20, 21, 22) occurs upon screwing to vertical flanges (17) oriented radially with respect to the axis of the tubular tower segment (1, 2).

4. Method according to one of the preceding claims,
**characterized in that**
an at least vertically movable work platform (46, 48) connected to the mounting support (41) is to be used for connecting two adjacent panels (10, 11, 12, 20, 21, 22), wherein the work platform (46, 48) is preferably rotatable about the axis of the tubular tower segment (1, 2) or movable about this axis over a circular path, wherein the work platform (46, 48) is further preferably movable or extendable in the radial direction with respect to the axis of the tubular tower segment (1, 2).

5. Method according to one of the preceding claims,
**characterized in that**
the panels (10, 11, 12, 20, 21, 22) have connection flanges (14) at their upper side, and in each case annular flange adapter segments (16) are arranged between the connection flanges (14) of the first and second panel (11, 12, 21, 22) and the mounting support (41), and, before or after the removal of the mounting support (41), the annular flange adapter is completed by further annular flange adapter segments (16).

6. Method according to one of the preceding claims,
**characterized in that**
the erection aid (30, 35) is a mounting template, a tubular tower foundation or a tubular tower segment (1) which is arranged below the tubular tower segment (2) to be mounted.

7. Mounting aid (40) for use in a mounting method according to one of Claims 1 to 6, having a mounting support (41) having at least one pair of spaced-apart attachment points (42) for fastening to the upper side of the first and second panel (11, 12, 21, 22) of an annular tubular tower segment (1, 2) to be built up from more than three ring segment-shaped panels (10, 11, 12, 20, 21, 22), and having a central region (43) situated centrally therebetween, wherein positioning arms (44) as orienting aid which are pivotable on the central region (43) are provided for the further panels (10, 20).

8. Mounting aid according to Claim 7,
**characterized in that**
the number of the positioning arms (44) is equal to or greater than the number of the further panels (10, 20).

9. Mounting aid according to Claim 7 or 8,
**characterized in that**
the positioning arms (44) are length-adjustable.

10. Mounting aid according to one of Claims 7 to 9,
**characterized in that**
the mounting aid (40) has a second pair of attachment points (42) which are arranged symmetrically around the central region (43) and which have a different spacing from one another than the first pair of attachment points (42).

11. Mounting aid according to one of Claims 7 to 10,
**characterized in that**
a crossmember (45) for a work platform (46) is rotatably fastened to the central region (43) of the mounting support (41), wherein the length of the crossmember (45) is preferably less than the smallest spacing of a pair of attachment points (42).

12. Mounting aid according to Claim 11,
**characterized in that**
a work platform (46), which is movable vertically with respect to the crossmember (45), is fastened to the crossmember (45), wherein the work platform (46) is preferably movable horizontally along the crossmember (45) and/or extendable in a direction parallel thereto.

13. Mounting aid according to one of Claims 7 to 10,
**characterized in that**
a circular path (47) for a work platform (48) is fastened to the mounting support (41) around the central region (43), wherein the diameter of the circular path (47) is preferably less than the smallest spacing of a pair of attachment points (42).

14. Mounting aid according to Claim 13,
**characterized in that**
a work platform (48), which is vertically movable with respect to the circular path (47), is fastened to the circular path (47), wherein the work platform (48) is preferably extendable in the radial direction with respect to the axis of the circular path (47).

## Revendications

1. Procédé de montage d'un segment de mât tubulaire (1, 2) composé d'au moins trois panneaux en forme de segments d'anneau (10, 11, 12, 20, 21, 22) sur un accessoire de montage annulaire orienté horizontalement (30, 35), qui est configuré pour recevoir l'extrémité inférieure du segment de mât tubulaire (1, 2), comprenant les étapes suivantes:
a) dresser un premier panneau en forme de segment d'anneau (11, 21) avec son côté inférieur sur l'accessoire de montage (30, 35);
b) dresser un deuxième panneau en forme de segment d'anneau (12, 22) avec son côté inférieur sur l'accessoire de montage (30, 35);
c) relier les côtés supérieurs du premier et du deuxième panneaux (11, 12, 21, 22) avec une poutre de montage (41), de telle manière que les deux panneaux (11, 12, 21, 22) se soutiennent mutuellement au moyen de la poutre de montage;
d) dresser un autre panneau (10, 20) voisin d'un panneau déjà dressé (10, 11, 12, 20, 21, 22) avec son côté inférieur sur l'accessoire de montage (30, 35);
e) relier l'autre panneau (10) à son côté supérieur au moyen d'un accessoire d'alignement à la poutre de montage (41), dans lequel l'accessoire d'alignement est formé par des bras de réglage pivotants (44) fixés à la poutre de montage (41);
f) relier l'autre panneau (10) au(x) autre(s) panneau(x) (10, 11, 12, 20, 21, 22);
g) répéter les étapes (d) et (e) jusqu'à ce que le segment de mât tubulaire (1, 2) soit complet; et
h) enlever la poutre de montage (41).

2. Procédé selon la revendication 1, **caractérisé en ce que** les bras de réglage (44) sont réglables en longueur.

3. Procédé selon l'une quelconque des revendications précédentes, **caractérisé en ce que** l'on effectue la liaison de deux panneaux voisins (10, 11, 12, 20, 21, 22) par vissage à des ailes verticales (17) orientées radialement par rapport à l'axe du segment de mât tubulaire (1, 2).

4. Procédé selon l'une quelconque des revendications précédentes, **caractérisé en ce que** pour relier deux panneaux voisins (10, 11, 12, 20, 21, 22) on utilise un plancher de travail (46, 48) relié à la poutre de montage (41) et déplaçable au moins verticalement, dans lequel le plancher de travail (46, 48) peut tourner de préférence autour de l'axe du segment de mât tubulaire (1, 2) ou est déplaçable sur un chemin circulaire autour de cet axe, dans lequel le plancher de travail (46, 48) peut en outre être déplacé ou sorti de préférence en direction radiale par rapport à l'axe du segment de mât tubulaire (1, 2).

5. Procédé selon l'une quelconque des revendications précédentes, **caractérisé en ce que** les panneaux (10, 11, 12, 20, 21, 22) présentent sur leur côté supérieur des ailes de liaison (14) et des segments d'adaptateur d'ailes annulaires (16) sont respectivement disposés entre les ailes de liaison (14) du premier et du deuxième panneaux (11, 12, 21, 22) et la poutre de montage (41), et l'adaptateur d'aile annulaire est complété par d'autres segments d'adaptateur d'ailes annulaires (16) avant ou après l'enlèvement de la poutre de montage (41).

6. Procédé selon l'une quelconque des revendications précédentes, **caractérisé en ce que** l'accessoire de montage (30, 35) est un gabarit de montage, une fondation de mât tubulaire ou un segment de mât tubulaire (1) placé en dessous d'un segment de mât tubulaire à monter (2).

7. Accessoire de montage (40) à utiliser dans un procédé de montage selon l'une quelconque des revendications 1 à 6, avec une poutre de montage (41) avec au moins une paire de points de liaison (42) espacés l'un de l'autre pour la fixation au côté supérieur du premier et du deuxième panneaux (11, 12, 21, 22) d'un segment de mât tubulaire annulaire (1, 2) à ériger en plus de trois panneaux en forme de segment d'anneau (10, 11, 12, 20, 21, 22) et une région centrale (43) située au milieu entre ceux-ci, dans lequel il est prévu à la région centrale (43) des bras de réglage pivotants (44) comme accessoires de montage pour les autres panneaux (10, 20).

8. Accessoire de montage selon la revendication 7, **caractérisé en ce que** le nombre des bras de réglage (44) est égal ou supérieur au nombre des autres panneaux (10, 20).

9. Accessoire de montage selon une revendication 7 ou 8, **caractérisé en ce que** les bras de réglage (44) sont réglables en longueur.

10. Accessoire de montage selon l'une quelconque des revendications 7 à 9, **caractérisé en ce que** l'accessoire de montage (40) présente une deuxième paire de points de liaison (42) disposée de façon symétrique autour de la région centrale (43), qui présentent une distance l'un de l'autre autre que la première paire de points de liaison (42).

11. Accessoire de montage selon l'une quelconque des revendications 7 à 10, **caractérisé en ce qu'**une traverse (45) pour un plancher de travail (46) est fixée de façon rotative à la région centrale (43) de la poutre de montage (41), dans lequel la longueur de la traverse (45) est de préférence plus petite que la plus petite distance d'une paire de points de liaison (42).

12. Accessoire de montage selon la revendication 11, **caractérisé en ce qu'**un plancher de travail (46) est fixé à la traverse (45), et est déplaçable verticalement par rapport à la traverse (45), dans lequel le plancher de travail (46) est déplaçable de préférence horizontalement le long de la traverse (45) et/ou peut être sorti dans une direction parallèle à celle-ci.

13. Accessoire de montage selon l'une quelconque des revendications 7 à 10, **caractérisé en ce qu'**un chemin circulaire (47) pour un plancher de travail (48) est fixé à la poutre de montage (41) autour de la région centrale (43), dans lequel le diamètre du chemin circulaire (47) est de préférence plus petit que la plus petite distance d'une paire de points de liaison (42).

14. Accessoire de montage selon la revendication 13, **caractérisé en ce qu'**un plancher de travail (48) est fixé au chemin circulaire (47), et est déplaçable verticalement par rapport au chemin circulaire (47), dans lequel le plancher de travail (48) peut être sorti de préférence en direction radiale par rapport à l'axe du chemin circulaire (47).
